Europäisches Patentamt

European Patent Office

Office européen des brevets

(19)

(11) Veröffentlichungsnummer: **0 238 477 B1**

(12) **EUROPÄISCHE PATENTSCHRIFT**

(45) Veröffentlichungstag der Patentschrift: **28.08.91**

(51) Int. Cl.⁵: **B23B 51/06**

(21) Anmeldenummer: **87890050.5**

(22) Anmeldetag: **16.03.87**

(54) **Rotierbares spanabhebendes Werkzeug.**

(30) Priorität: **18.03.86 AT 721/86**

(43) Veröffentlichungstag der Anmeldung:
**23.09.87 Patentblatt 87/39**

(45) Bekanntmachung des Hinweises auf die
Patenterteilung:
**28.08.91 Patentblatt 91/35**

(84) Benannte Vertragsstaaten:
**AT CH DE FR LI NL**

(56) Entgegenhaltungen:
**DE-A- 3 208 282**
**DE-A- 3 601 385**
**US-A- 4 556 532**

(73) Patentinhaber: **BÖHLER Gesellschaft m.b.H.**
**Elisabethstrasse 12**
**A-1010 Wien(AT)**

(72) Erfinder: **Wirth, Günter**
**Memmingerstrasse 22**
**W-7959 Balzheim 2(DE)**
Erfinder: **Prattes, Peter**
**Johann-Böhmstrasse 54**
**A-8605 Kapfenberg(AT)**
Erfinder: **Grassmück, Gunter, Dipl-Ing.**
**Franz Nablweg 6**
**A-8605 Kapfenberg(AT)**

## Beschreibung

Die Erfindung betrifft ein rotierbares spanabhebendes Werkzeug, insbesondere Bohr-, Fräs- und/oder Reibwerkzeug, mit ausgeprägter Längserstreckung in Richtung der Rotation-bzw. Hauptachse aufweisendem, durch Sintern von zwei im wesentlichen konzentrischen Teilen einstückig verbundenem Werkzeugkörper mit Hartmetall bzw. Hartstoff, der an seiner Außenseite mindestens eine, vorzugsweise in einem von 0° verschiedenen Winkel zur Achse, insbesondere etwa wendelartig verlaufende, Nut und mindestens einen deren Verlauf entsprechend verlaufenden, gegebenenfalls mindestens eine Schneide aufweisenden Steg sowie mindestens einen den werkzeugkörper in Längserstreckung im wesentlichen durchsetzenden Kanal für die Führung eines fluiden Mediums aufweist.

Im Zuge der Rationalisierung und Automatisierung der spanabhebenden Metallbearbeitung, wobei für immer schwierigere Bearbeitungsaufgaben an die Werkzeuge steigende Ansprüche wie erhöhte Standzeiten und Arbeitsgeschwindigkeiten gestellt sind, werden in steigendem Maß Bohr-, Fräs- und Reibwerkzeuge, welche aus gesintertem Voll-Hartmetall bzw.-Hartstoff gefertigt sind, eingesetzt. Es wurde schon vorgeschlagen ( DE-A-3 208 282) , einen Hartmetallkörper insbesondere entsprechend den örtlichen Beanspruchungen des Erzeugnisses aus unterschiedlich zusammengesetzten Einzelteilen durch Sintern einstückig zu verbinden. Hartmetallwerkzeuge werden z.B. zum Einbringen bzw. zur Bearbeitung von Tieflochbohrungen in Werkstücken aus hochfesten Legierungen verwendet. Im Betrieb treten dabei an dem Werkzeug hohe Temperaturen von oft weit über 600 °C auf. Zur Erreichung hohen Bohrfortschrittes und insbesondere, um die Spanausbringung aus den tiefen Bohrlöchern zu fördern, sind Bohrer mit einem zentralen Kanal für Spülmittelzufuhr versehen worden, von welchen in Nähe des vorderen Endes des Bohrers gegebenenfalls mehrere jeweils an der Vorderseite zwischen Bohrermitte und- rand nach außen mündende Zweigkanäle ausgehen, wodurch das Spülmittel nahe an die Arbeitsstelle gebracht werden kann. Die Herstellung solcher Bohrer kann im wesentlichen erfolgen, indem mit mechanischem oder isostatischem Pressen aus einem Hartmetallsintergranulat einer jeweils angestrebten Dimension entsprechende Preßlinge hergestellt werden, und nach einem Vorsintern in dieselbe, z.B. mittels Diamantschleifscheiben Außennuten einem jeweils gewünschten, z.B. wendelartigen, Verlauf entsprechend sowie der Spülmittelkanal mittels Bohrer eingearbeitet werden, wonach endgültiges Sintern erfolgt, an das sich letztlich ein Endbearbeitungsvorgang, insbesondere zur Ausbildung der Wendelschneiden anschließt.

Dieses Einbringen der Bohrung ist aufwendig, und es wird mit steigender Bohrer- und damit bzw. Kühlkanallänge immer schwieriger und unexakter. Es gibt dann noch die Möglichkeit, die Kanalbohrung im Vorsinter-Formkörper von beiden Stirnseiten her einzubringen, wobei allerdings ein exaktes Fluchten der beiden Bohrungsteile praktisch nicht erreichbar ist. Die unexakte Stoßstelle im Kanal behindert den Spülmittelfluß und bewirkt Druckverlust.

Die Erfindung hat sich die Aufgabe gestellt, ein wie eingangs erwähntes rotierbares spanabhebendes Werkzeug mit Hartmetall-Werkzeugkörper mit mindestens einem Innenkanal zu schaffen, bei welchem eine durch die Herstellungsweise bedingte Beschränkung der Längserstreckung vermieden ist, wobei die Herstellung wenig aufwendig sein soll.

Gegenstand der Erfindung ist somit ein rotierbares, spanabhebendes Werkzeug, insbesondere Bohr-, Fräs- oder Reibwerkzeug der eingangs erwähnten Art, welches im wesentlichen darin besteht, daß im mit einem die Achse aufweisenden Innenteil und mindestens einem mit demselben im wesentlichen über die Gesamtlängserstreckung flächig sinterverbundenen zumindest einen radial außenliegenden Bereich des Steges aufweisenden bzw. bildenden Außenteil einstückig aufgebauten Werkzeugkörper im Bereich des Sinterverbundes der genannten Teile mindestens ein im wesentlichen dem, vorzugsweise wendelartigen, Verlauf des Steges entsprechend verlaufenden Kanal angeordnet ist, wobei dessen Wandung im wesentlichen über seine gesamte Erstreckung zum Teil vom Innenteil und zum restlichen Teil vom Außenteil gebildet ist. Bei einem derartigen, aus zwei miteinander integral über flächigen Sinterverbund über im wesentlichen die gesamte Längserstreckung gebundene(n) Innen- und Außenteil bzw. Außenteile aufweisenden Bohrer, Fräser od. dgl. ist der Vorteil gegeben, daß das Werkzeug in seiner Länge nicht beschränkt ist, der Kanalquerschnitt mehr variierbar ist und, wenn mehrere Stege mit Schneiden vorhanden sind, jeder dieser Stege einen seinem Verlauf entsprechenden Verlauf aufweisenden Kanal aufweisen kann, womit ein höherer Gesamt-Querschnitt zur Verfügung steht und damit größerer Durchsatz an Spülmittel erfolgt, wodurch der Spanabtransport verbessert wird. Weiters wird exakte Kühlung der Wendel und Schneiden ihrer gesamten Länge und ihrem Verlauf folgend vom Materialinneren her erreicht, und es ist der Vorteil gegeben, daß jeder Kanal an jeweils einer gewünschten Stelle an der Stirnseite des Werkzeuges, also z.B. bei Bohrern zwischen Bohrerspitze und Bohrerrand ausmündet, sodaß optimale Position des Spülmediumaustritts erreichbar ist. Durch die exakte Kühlung der Schneiden können Schnittgeschwindigkeit und Vorschub erheblich erhöht werden. Die aufwendige Einbringung einer Bohrung in Längsrichtung in den vorgesinterten Werkzeugkörper, wie bisher, ist nicht erforderlich. Durch den den Kanal in jedem Steg umschließenden integralen Verbund des Innenteils mit gegebenenfalls mehreren zumindest radial außen liegende Bereiche der Stege umfassenden Außenteilen ist außerdem eine Art Sandwich-Struktur-Effeckt erreicht, wodurch die Tendenz der hohe Länge aufweisenden Werkzeuge zu Vibrationen auch bei hohen Drehzahlen wesentlich vermindert ist und somit ebenfalls größere Länge und höhere Exaktheit der niedergebrachten Bohrungen ermöglicht ist. Durch die ursprünglich zweiteilige Ausbildung des Werkzeugkörpers können die Kanäle jede(n) gewünschte(n), den Wendeln angepaßte(n) Steigung und Spiralwinkel aufweisen. Weiterer Vorteil ist, daß bei Nachschleifen des Bohrers keine Beschränkung gegeben ist, da die Kanäle über die gesamte Länge im gleichen Abstand von der Rotationsachse angeordnet sind.

Zum Sinterverbund selbst ist zu erwähnen, daß aus DE-OS 28 10 746 längliche Hartmetallkörper mit aneinander durch Sinterverbund gebundenem Kern und Mantelkörper bekannt geworden sind.

Das neue Werkzeug läßt sich vereinfacht fertigen, wen der Kanal entlang einer achsparallelen zylindrischen Sinterverbundfläche von Innen- und Außenteil verlaufend angeordnet ist.

Wenn, wie bevorzugt, der vom Außenteil gebildete Teil der Wandung des Kanals der Fläche des Sinterverbundes von Innen- und Außenteil entspricht, ist trotz des Vorhandenseins eines Kanals im Außenteil des Steges bzw. der Stege, wo starke mechanische Beanspruchung erfolgt, keine Materialschwächung gegeben.

Zur Erreichung hoher Stabilität gegen Schwingung sowie zur Berücksichtigung der verschiedenartigen Beanspruchung von Werkzeugaußenseite und Werkzeugkern kann vorteilhaft vorgesehen werden, daß zum einstückigen Werkzeugkörper sinterverbundener Innen- und Außenteil mit unterschiedliche chemische Zusammensetzung und/oder unterschiedliche physikalische Eigenschaften aufweisenden Sinterhartmetallen gebildet sind. So kann z.B. der Innenteil mit einem zäheren Sinterhartmetall, z.B. K 20 und der Außenteil mit einem verschleißfesteren Sinterhartmetall K 10 jeweils gemäß ISO Recommandation R 513 1, Ausg. Nov. 1966 gebildet sein.

Zusätzlich zur verbesserten Versorgung des Werkzeuges mit Spülmittel weisen in diesem Fall die radial außenliegenden Bereiche des Werkzeuges höhere Verschleißfestigkeit als der Innenteil auf, welcher die höhere Zähigkeit beiträgt.

Es ist ergänzend anzumerken, daß die Kanäle Abschnitte unterschiedlichen Verlaufes aufweisen können. So können sie im Bereich von Wendeln, Schneiden od. dgl. wendelartig verlaufen und im Werkzeugschaft einen achsparallel entlang der Sinter-Verbund-Fläche verlaufenden Abschnitt aufweisen.

Ein bevorzugtes Verfahren zur Herstellung des erfindungsgemäßen Werkzeuges besteht darin, daß aus Hartmetall-Sintergranulat mit, gegebenenfalls isostatischem, Pressen und nachfolgendem Vorsintern, ein, vorzugsweise rotationssymmetrischer, Innenteil-Formkörper und ein eine dem Außenmantel desselben dimensionsmäßig entsprechende Ausnehmung aufweisender Außenteil-Formkörper gebildet werden, in den Mantel des Innenteil-Formkörpers einem gewünschten, vorzugsweise wendelartigen, Verlauf mindestens eines Kanals für flüssiges Medium entsprechend, mindestens eine Nut, Rinne od. dgl. eingearbeitet wird, der Innenteil-Formkörper vorzugsweise vollflächig mit seiner Außenseite an der Innenseite des Außenteil-Formkörpers anliegend in dem Außenteilformkörper angeordnet wird und die beiden Körper mittels Sinterns miteinander materialschlüssig verbunden werden, wonach Endbearbeitung erfolgt. Bei dieser Art der Herstellung wird das bisherige aufwendige Einbringen einer Bohrung in einen vorgesinterten Formkörper durch ein wesentlich einfacheres Einarbeiten einer dem gewünschten Kanalverlauf entsprechend verlaufenden Nut an der Außenfläche des Innenteil-Vorfomkörpers, das problemlos automatisch erfolgen kann, ersetzt. Bevorzugt können Gruppen von nebeneinander verlaufenden mehreren Kanälen eingearbeitet werden, wenn der Bohrer mehr als eine Wendel aufweist. Das nach dem Fertigsintern erfolgende Einarbeiten der Außennuten unter Ausbildung der gegebenenfalls mehrfachen Bohrerwendel bzw. der mehrere Schneiden tragenden Stege eines Fräsers kann so tief vorgenommen werden, daß diese im Nutgrundbereich in dem Innenteil eingearbeitet sind. Für den Fall, daß die Außennuten geringere Tiefe aufweisen und nicht bis in den Innenteil reichen, kann auch so vorgegangen werden, daß schon im vorgesinterten Außenteil-Vorformkörper in dessen Mantel die entsprechenden Nuten vor-eingearbeitet werden, sodaß nach dem Sintern nur mehr ein Nacharbeiten der Nuten und das Schleifen von Schneiden erforderlich sind.

Zur Erreichung eines insbesondere auch im Bereich des Kanales bzw. der Kanäle voll gesicherten Sinterverbundes ist es besonders vorteilhaft, wenn vor dem Vorsintern der Innenteil-Formkörper-Rohling mit mindestes 20 %, vorzugsweise 30 - 100 %, höherem Druck als der Preßdruck bei Bildung des Außenteil-Formkörper-Rohlings, vorzugsweise isostatisch gepreßt wird. Es wird hiebei zur Herstellung des Werkzeug-Formkörpers durch Sintern der Unterschied im Schrumpfgrad zwischen Innenteil und Außenteil ausgenutzt. Der Schwund des Außenteiles ist infolge des niedrigeren Vorpreßdruckes stärker und es erfolgt so eine Art Einschrumpfen des Innenteiles unter Ausbildung eines hochdichten Sinterverbunds an der vorherigen Anliegefläche der beiden Teile. Bei Einhaltung der genannten Grenzen ist hohe Sicherheit des Sinterverbundes gegeben, wobei auch an den Stoßstellen zwischen von Innenteil und von Außenteil gebildeter Kanalwandung glatter Verbund ohne Spalte gewährleistet ist.

Beispiel:

Mit einer Hartmetall-Sinterpulvermischung der Zusammensetzung 6,3 Gew.% Co, Rest: WC + 2,5 Gew.-% (TiTaNb) C Durchschnittskorngröße 1 μm wurde durch isostatisches Pressen mit einem Druck von 1800 bar ein Vorformkörper-Rohling gebildet, welcher nach 11-stündigem Aufheizen bei etwa 750° C eine Stunde lang vorgesintert wurde. Aus diesem wurde ein 180 mm langer, etwa zylindrischer Innenteil-Vorformkörper mit 11,0 mm Durchmesser herausgearbeitet. Dessen Mantelfläche wurde, beginnend von drei im gleichen Winkel voneinander entfernten Stellen der Stirnseitenfläche aus durchgehend mit 30° Steigungswinkel aufweisenden, im wesentlichen halbkreisförmigen Nuten mit einem Radius von 1,1 mm versehen.

Mit im wesentlichen gleiche Zusammensetzung aufweisendem Granulat einer Durchschnittskorngröße von 0,7 μm wurde mittels isostatischen Pressens mit 1000 bar, nachfolgenden Vorsinterns unter den oben beschriebenen Bedingungen und Bearbeitens eine 180 mm lange hohl-zylindrische Vorformkörper-Hülse mit einem Innendurchmesser von 11,1 mm und einem Außendurchmesser von 22,2 mm gebildet. Der, wie beschrieben, mit den drei Kanal-Nuten versehene Innenteil-Vorformkörper wurde in den Hohlraum der Außenteil-Hülse eingebracht und der zusammengesetzte Körper wurde nach 10-stündigem Aufheizen bei 1450° C eine Stunde lang bei einem Druck von 0,1 mbar gesintert. Der erhaltene Bohrer-Formkörper wies eine Länge von 144 mm und einen Durchmesser von 17,5 mm auf. In dessen Außenmantel wurden jeweils in einer Position zwischen den drei vorher in den Vorsinterkörper eingearbeiteten Kühlkanälen die Wendelnuten eingearbeitet, dann die Schneiden geschliffen und der Bohrer abgelängt. Auf diese Weise erhaltene Bohrer ermöglichen im Vergleich zu einem gleichartigen mit einer Sintermetallgranulatmischung, wie sie der Außenteil des oben beschriebenen Bohrers aufwies, gefertigten Bohrern mit konventionellen zwei Zweigkanäle an der Spitze aufweisendem Kühlkanal von 2 mm Durchmesser beim Bohren in Grauguß unter gleichen Bedingungen eine durchschnittlich 1,4-fache Vorschubgeschwindigkeit.

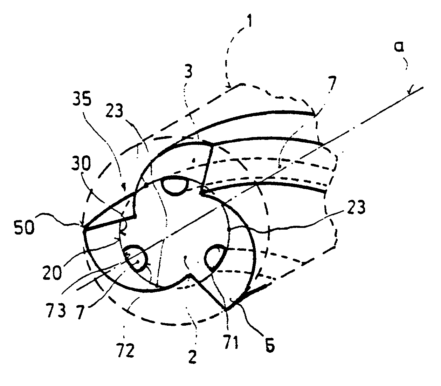

Anhand der Zeichnung wird die Erfindung näher erläutert:

In der schematischen Schrägansicht ist mit unterbrochener Linie ein erfindungsgemäßer Bohrerkörper 1 angedeutet, bevor in diesen Außen-Wendelnuten 7 eingearbeitet werden, welcher mit einem die Achse a aufweisenden zylindrischen Innenteil 2 und einem diesen hülsenartig vollumschließenden Außenteil 3 jeweils aus Sinterhartmetall aufgebaut ist, wobei diese Teile über die Außenfläche 20 des Innenteiles 2 und die Innenfläche 30 des Hohlraumes des Außenteiles 3 mittels echten Sinterverbundes 23 einstückig verbunden sind. Es ist an der Stirnfront des gezeigten Bohrerkörpers 1 ersichtlich, wie an der Außenfläche 20 des Innenteils 2 im gleichen Winkel α voneinander drei etwa halbkreisförmige Nuten mit hier im wesentlichen wendelartigem Verlauf angeordnet sind, wobei die Nut-Wandung 72 im Innenteil 2 gebildet ist. Der restliche Teil 73 der Wandung 71 der geschlossenen Kanäle 7 ist von der Innenfläche 30 des Außenteiles 3 gebildet und weist die gleiche Krümmung auf wie diese. Von der Stirnseite des Bohrers ausgehend sind die nach dem Fertigsintern in die Außenseite des Außenteils 3 eingearbeiteten Nuten 35, dargestellt, wobei im vorliegenden Fall diese hier mit ihrem Nutgrund in den Innenkörper 2 reichen. Die dabei gebildeten Stege 5 mit Schneiden 50 haben den gleichen Verlauf wie die Kanäle 7 im Inneren des Hartmetall-Bohrers.

**Patentansprüche**
**Patentansprüche für folgende Vertragsstaaten : NL, CH, LI, AT**

1. Rotierbares spanabhebendes Werkzeug, insbesondere Bohr-, Fräs- und/oder Reibwerkzeug, mit ausgeprägte Längserstreckung in Richtung der Rotations- bzw. Haupachse (a) aufweisendem, durch Sintern von zwei im wesentlichen konzentrischen Teilen (2,3) einstückig verbundenem Werkzeugkörper (1), mit Hartmetall bzw. Hartstoff, der an seiner Außenseite mindestens eine, vorzugsweise in einem von 0° verschiedenen Winkel zur Achse (a), insbesondere etwa wendelartig verlaufende, Nut und mindestens einen deren Verlauf entsprechend verlaufenden, gegebenenfalls mindestens eine Schneide aufweisenden Steg (5) sowie mindestens einen den Werkzeugkörper (1) in Längserstreckung im wesentlichen durchsetzenden Kanal (7) für die Führung eines fluiden Mediums aufweist, dadurch gekennzeichnet, daß im mit einem die Achse (a) aufweisenden Innenteil (2) und mindestens einem mit demselben im wesentlichen über die Gesamtlängserstreckung flächig sinterverbundenen zumindest einen radial außenanliegenden Bereich des Steges (5) aufweisenden bzw. bildenden Außenteil (3) einstückig aufgebauten Werkzeugkörper (1) im Bereich des Sinterverbundes (23) der genannten Teile (2,3) mindestens ein im wesentlichen dem, vorzugsweise wendelartigen, Verlauf des Steges (5) entsprechend verlaufender Kanal (7) angeordnet ist, wobei dessen Wandung (71) im wesentlichen über seine gesamte Erstreckung zum Teil (72) vom Innenteil (2) und zum restlichen Teil (73) vom Außenteil (3) gebildet ist.

2. Werkzeug nach Anspruch 1, dadurch gekennzeichnet, daß der Kanal (7) entlang einer achsparallelen zylindrischen Sinterverbundfläche (23) von Innen (2)- und Außenteil (3) verlaufend angeordnet ist.

3. Werkzeug nach Anspruch 1 oder 2, dadurch gekennzeichnet, daß der vom Außenteil (3) gebildete Teil (73) der Wandung (71) des Kanals (7) der Fläche (23) des Sinterverbundes von Innen (2)- und Außenteil (3) entspricht.

4. Werkzeug nach einem der Ansprüche 1 bis 3, dadurch gekennzeichnet, daß zum einstücki-gen Werkzeugkörper (1) sinterverbundener In-nen (2) - und Außenteil (3) mit unterschiedliche chemische Zusammensetzung und/oder unter-schiedliche physikalische Eigenschaften auf-weisenden Sinterhartmetallen gebildet sind.

5. Verfahren zur Herstellung eines Werkzeuges bzw. Werkzeugkorpers nach einem der Ansprüche 1 bis 4, dadurch gekennzeichnet, daß aus Hartmetall-Sintergranulat mit, gegebenen-falls isostatischem, Pressen und nachfolgen-dem Vorsintern, ein, vorzugsweise rotations-symmetrischer, Innenteil-Formkörper und ein eine dem Außenmantel desselben dimensions-mäßig entsprechende Ausnehmung aufweisen-der Außenteil-Formkörper gebildet werden, in den Mantel des Innenteil-Formkörpers, einem gewünschten, vorzugsweise wendelartigen, Verlauf mindestens eines Kanals für flüssiges Medium entsprechend, mindestens eine Nut, Rinne od. dgl. eingearbeitet wird, der Innenteil-Formkörper mit seiner Außenseite vorzugsweise vollflächig an der Innenseite des Außenteil-Formkörpers anliegend in dem Außenteil-Formkörper angeordnet wird und die beiden Körper mittels Sinterns miteinander materi-alschlüssig verbunden werden, wonach Endbe-arbeitung erfolgt.

6. Verfahren nach Anspruch 5, dadurch gekennzeichnet, daß vor dem Vorsintern der Innenteil-Formkörper-Rohling, mit mindestens 20 %, vorzugsweise 30 - 100 %, höherem Druck, als der Preßdruck bei Bildung des Außenteil-Formkörper-Rohlings, vorzugsweise isosta-tisch, gepreßt wird.

**Patentansprüche für folgende Vertragsstaaten : DE, FR**

1. Rotierbares spanabhebendes Fräs- und/oder Reibwerkzeug mit ausgeprägte Längserstrek-kung in Richtung der Rotation- bzw. Hauptachse (a) aufweisendem, durch Sintern von zwei im wesentlichen konzentrischen Teilen (2,3) einstückig verbundenem Werkzeugkörper (1), mit Hartmetall bzw. Hartstoff, der an seiner Außenseite mindestens eine, vorzugsweise in einem von 0˚ verschiedenen Winkel zur Achse (a), insbesondere etwa wendelartig verlaufende, Nut und mindestens einen deren Verlauf entsprechend verlaufenden, gegebenenfalls mindestens eine Schneide aufweisenden Steg (5) sowie mindestens einen den Werkzeugkörper (1) in Längserstreckung im wesentlichen durchsetzenden Kanal (7) für die Führung eines fluiden Mediums aufweist, dadurch gekennzeichnet, daß im mit einem die Achse (a) aufweisenden Innenteil (2) und mindestens einem mit demselben im wesentlichen über die Gesamtlängserstreckung flächig sinterverbundenen zumindest einen radial außenliegenden Bereich des Steges (5) aufweisenden bzw. bildenden Außenteil (3) einstückig aufgebauten Werkzeugkörper (1) im Bereich des Sinterverbundes ( 23) der genannten Teile ( 2,3) mindestens ein im wesentlichen dem, vorzugweise wendelartigen, Verlauf des Steges (5) entsprechend verlaufender Kanal (7) angeordnet ist, wobei dessen Wandung (71) im wesentlichen über seine gesamte Erstreckung zum Teil (72) vom Innenteil (2) und zum restlichen Teil (73) vom Außenteil (3) gebildet ist.

2. Werkzeug nach Anspruch 1, dadurch gekennzeichnet, daß der Kanal (7) entlang einer achsparallelen zylindrischen Sinterverbundfläche (23) von Innen (2)- und Außenteil (3) verlaufend angeordnet ist.

3. Werkzeug nach Anspruch 1 oder 2, dadurch gekennzeichnet, daß der vom Außenteil (3) gebildete Teil (73) der Wandung (71) des Kanals (7) der Fläche (23) des Sinterverbundes von Innen (2)- und Außenteil (3) entspricht.

4. Werkzeug nach einem der Ansprüche 1 bis 3, dadurch gekennzeichnet, daß zum einstücki-gen Werkzeugkörper (1) sinterverbundener In-

nen (2) - und Außenteil (3) mit unterschiedliche chemische Zusammensetzung und/oder unterschiedliche physikalische Eigenschaften aufweisenden Sinterhartmetallen gebildet sind.

5. Verfahren zur Herstellung eines Werkzeuges bzw. Werkzeugkörpers nach einem der Ansprüche 1 bis 4, dadurch gekennzeichnet, daß aus Hartmetall-Sintergranulat mit, gegebenenfalls isostatischem, Pressen und nachfolgendem Vorsintern, ein, vorzugsweise rotationssymmetrischer, Innenteil-Formkörper und ein eine dem Außenmantel desselben dimensionsmäßig entsprechende Ausnehmung aufweisender Außenteil-Formkörper gebildet werden, in den Mantel des Innenteil-Formkörpers, einem gewünschten, vorzugsweise wendelartigen, Verlauf mindestens eines Kanals für flüssiges Medium entsprechend, mindestens eine Nut, Rinne od. dgl. eingearbeitet wird, der Innenteil-Formkörper mit seiner Außenseite vorzugsweise vollflächig an der Innenseite des Außenteil-Formkörpers anliegend in dem Außenteil-Formkörper angeordnet wird und die beiden Körper mittels Sinterns miteinander materialschlüssig verbunden werden, wonach Endbearbeitung erfolgt.

6. Verfahren nach Anspruch 5, dadurch gekennzeichnet, daß vor dem Vorsintern der Innenteil-Formkörper-Rohling, mit mindestens 20 %, vorzugsweise 30 - 100 %, höherem Druck, als der Preßdruck bei Bildung des Außenteil-Formkörper-Rohlings, vorzugsweise isostatisch, gepreßt wird.

## Claims

1. Rotating, cutting milling and/or reaming tool with a tool body (1) having a pronounced longitudinal extent in the direction of the axis of rotation or principal axis (a), joined in one piece by sintering two substantially concentric sections (2, 3), with hard metal or hard material, which has on its outside at least one groove extending preferably at an angle other than 0° to the axis (a), in particular approximately running in a helix, and at least one land (5), running corresponding to the course thereof, having optionally at least one cutting edge and at least one channel (7) which substantially passes through the tool body (1) in the longitudinal extent for carrying a fluid medium, characterised in that in the tool body (1) which is constructed in one piece with an inner section (2) containing the axis (a) and at least one outer section (3) sinter-bonded therewith on its surface substantially over the entire longitudinal extent and having or forming at least one radially outer region of the land (5), at least one channel (7) running corresponding substantially to the preferably helical course of the land (5) is located in the region of the sinter-bond (23) of the aforementioned sections (2, 3), with the walls (71) of said channel being formed substantially over its entire extent partly (72) by the inner section (2) and for the remaining part (73) by the outer section (3).

2. Tool according to Claim 1, characterised in that the channel (7) is arranged running along a paraxial cylindrical sinter-bond surface (23) of the inner (2) and outer (3) section.

3. Tool according to Claim 1 or 2, characterised in that the section (73) of the wall (71) of the channel (7) which is formed by the outer section (3) corresponds to the surface (23) of the sinter-bond of the inner (2) and outer (3) section.

4. Tool according to one of Claims 1 to 3, characterised in that the inner (2) and outer (3) sections which are sintered together to form the one-piece tool body (1) are formed with sintered metal carbides having different chemical compositions and/or different physical properties.

5. Process for manufacturing a tool or tool body according to one of Claims 1 to 4, characterised in that a preferably rotationally symmetrical inner section moulded part and an outer section moulded part having a recess corresponding in dimensions to the outer shell thereof are formed from hard metal sinter granules with optionally isostatic pressing and subsequent pre-sintering, at least one groove, channel or the like is machined into the shell of the inner section moulded part, corresponding to a desired, preferably helical, course of at least one channel for liquid medium, the inner section moulded part is arranged in the outer section moulded part with its outside lying preferably with its full surface on the inside of the outer section moulded part and the two bodies are joined together with a material lock by means of sintering, whereafter finishing takes place.

6. Process according to Claim 5, characterised in that before the pre-sintering the inner section moulded part casting is pressed, preferably isostatically, with at least 20%, preferably 30 - 100%, higher pressure than the pressing pressure when forming the outer section moulded part casting.

**Revendications**

1. Outil de fraisage et/ou d'alésage rotatif à enlèvement de copeaux, à corps d'outil (1) en alliage dur ou matériau dur, solidarisé en une seule pièce par frittage de deux parties (2, 3) sensiblement concentriques, présentant une extension longitudinale prononcée dans le sens de l'axe de rotation ou principal (a), qui présente, sur sa face extérieure, au moins une rainure s'étendant, de préférence, suivant un angle différent de 0° par rapport à l'axe (a), en particulier environ hélicoïdale, et au moins un méplat (5) s'étendant suivant l'extension de cette dernière, éventuellement présentant au moins une arête tranchante, ainsi qu'au moins un canal (7) traversant sensiblement le corps d'outil (1) dans le sens longitudinal, destiné au passage d'un fluide, caractérisé en ce que, dans un corps d'outil (1) construit en une seule pièce à partir d'une partie intérieure (2) présentant l'axe (a) et d'au moins une partie extérieure (3) rendue solidaire en surface de cette dernière par frittage, sensiblement sur toute l'extension longitudinale, présentant ou formant au moins une zone du méplat (5) située radialement à l'extérieur, il est disposé, dans la zone de liaison par frittage (23) desdites parties (2, 3), au moins un canal (7) s'étendant sensiblement suivant l'extension, de préférence hélicoïdale, du méplat (5), sa paroi (71) étant formée, sensiblement sur toute son extension, pour une partie (72) par la partie intérieure (2) et, pour la partie restante (73), par la partie extérieure (3).

2. Outil suivant la revendication 1, caractérisé en ce que le canal (7) est disposé le long d'une face (23) cylindrique, parallèle à l'axe, de liaison par frittage de la partie intérieure (2) et de la partie extérieure (3).

3. Outil suivant la revendication 1 ou 2, caractérisé en ce que la partie (73) de la paroi (71) du canal (7), formée par la partie extérieure (3), correspond à la face (23) de la liaison par frittage de la partie intérieure (2) et de la partie extérieure (3).

4. Outil suivant l'une des revendications 1 à 3, caractérisé en ce que, pour former le corps d'outil (1) d'une seule pièce, il est formé une partie intérieure (2) et une partie extérieure (2), rendues solidaires par frittage, en alliages durs frittés présentant une composition chimique différente et ou des propriétés physiques différentes.

5. Procédé de fabrication d'un outil ou d'un corps d'outil suivant l'une des revendications 1 à 4, caractérisé en ce qu'il est formé, à partir d'un granulé fritté d'alliage dur, par pressage, éventuellement isostatique, et préfrittage successif, un corps moulé de partie intérieure, de préférence symétrique en rotation, et un corps moulé de partie extérieure présentant un évidement correspondant en dimensions à l'enveloppe extérieure de ce dernier, qu'il est usiné, dans l'enveloppe du corps moulé de partie intérieure, au moins une rainure, un chéneau ou similaire, correspondant à une extension désirée, de préférence hélicoïdale, d'un canal à fluide, que le corps moulé de partie intérieure est disposé dans le corps moulé de partie extérieure avec sa face extérieure s'appuyant sur la face intérieure du corps moulé de partie extérieure, de préférence sur toute la surface, et que les deux corps sont rendus solidaires l'un de l'autre, en liaison de matériau, par frittage, après quoi est réalise un usinage final.

6. Procédé suivant la revendication 5, caractérisé en ce que, avant le préfrittage de la pièce brute de corps moulé de partie intérieure, il est pressé, de préférence de manière isostatique, avec une pression d'au moins 20%, de préférence de 30 à 100%, supérieure à la pression de pressage lors de la formation de la pièce brute de corps moulé de partie extérieure.